# FASCICULE DE BREVET EUROPEEN

(11) **EP 2 323 114 B1**
(45) Date de publication et mention de la délivrance du brevet: **31.10.2012**
(21) Numéro de dépôt: 09306090.3
(22) Date de dépôt: 13.11.2009
(51) Int. Cl.: G08C 17/00, H04L 1/16, H04L 29/08, H04L 1/18

(54) **Procédé d'obtention rapide d'informations sur l'état de fonctionnement d'une pluralité d'équipements fonctionnant en groupe dans un réseau de type domotique.**
Verfahren zum schnellen Erhalt von Informationen über den Betriebszustand einer Mehrzahl von in einer Gruppe arbeitenden Einrichtungen in einem Hausautomatisierungsnetz
Method for quickly obtaining information on the operating status of a plurality of devices operating in a group within a home-automation network.

(43) Date de publication de la demande: 18.05.2011
(73) Titulaire: HAGER CONTROLS, 67700 Saverne (FR)
(72) Inventeur: Robin, Serge, F-67700 Landersheim (FR); Magneron, Philippe, F-67370 Truchtersheim (FR); Fricker, Philippe, F-67330 Bouxwiller (FR)
(74) Mandataire: Littolff, Denis

(56) Documents cités:
- EP-A1- 1 014 577
- EP-A2- 1 722 340
- GB-A- 2 442 551
- US-A1- 2006 282 739
- US-A1- 2007 124 372

## Description

La présente invention concerne un procédé d'obtention rapide déformations sur l'état de fonctionnement d'une pluralité d'équipements fonctionnant en groupe et commandés par au moins un dispositif de commande via un réseau de type domotique. Un tel procédé est décrit dans le document EP 1 722 340.

L'objectif de l'invention est le contrôle du fonctionnement d'équipements par exemple implantés dans des bâtiments, aussi bien à destination de maisons particulières que pour des immeubles à vocation tertiaire. L'enjeu est l'accélération du transfert déformations de type applicatives, c'est à dire gérées par les couches supérieures des protocoles de communication, dans le cadre du contrôle et de la commande de ces équipements. L'invention ne dépend à cet égard pas des véhicules de communication, qui peuvent être aussi bien filaires que radio, infrarouges, optiques, ou utiliser les courants porteurs sur les câbles du secteur, etc...

Dans les applications domotiques actuelles, la commande des équipements électriques est dans la plupart des cas effectuée de manière centralisée, au moyen de dispositifs de programmation fixes ou portables permettant d'effectuer et de contrôler des configurations de fonctionnement au moyen des canaux de communication précités selon les besoins des utilisateurs. Dans l'hypothèse de la programmation de séquences répétitives ou de mise en oeuvre d'un nombre raisonnable de suites de séquences différentes, les moyens de programmation et de contrôle actuels sont en général satisfaisants.

La mise en oeuvre d'une séquence de fonctionnement très simple que l'on peut évoquer à titre d'exemple, aboutissant à des échanges d'informations sur le réseau, part du constat que pour pouvoir commander efficacement des groupes d'équipements, le cas échéant par des dispositifs de commande différents, il est nécessaire de savoir précisément leur état au moment où la commande doit être appliquée. Or, en général, la collecte des informations relatives à l'état de ces équipements s'éffectue au niveau de la couche logicielle applicative du réseau, par l'usage de messages spécifiques d'interrogation individuelle des équipements du groupe. Chacun de ces équipements renvoie ensuite un message en réponse à la requête du dispositif émetteur, qui est en général le dispositif de commande.

L'envoi de requête au niveau de la couche logicielle applicative ne permet cependant pas l'obtention des informations en retour dans un temps admissible, c'est-à-dire « physiologiquement transparent » pour les individus : on entend par là que la circulation des messages nécessite une durée telle qu'un être humain perçoit un délai entre la commande à l'origine de la requête d'indication d'états et son exécution. La durée du temps de collecte desdites informations, qui résulte du transfert de données au niveau des couches supérieures applicatives du réseau, dépend directement du nombre d'équipements du groupe, ainsi que d'autres facteurs d'ordre technique comme par exemple le mode d'alimentation de l'équipement à l'origine de l'interrogation. Ainsi, si ce dernier est alimenté par piles, le retour des informations requises peut nécessiter plusieurs secondes par équipement du groupe.

Dans un groupe étendu, c'est-à-dire comportant un nombre relativement élevé d'équipements, il est fréquent pour ne pas dire certain que les états de fonctionnement diffèrent d'un équipement à l'autre. Ainsi, en prenant l'exemple le plus simple et le plus immédiat des équipements qui fonctionnent sur deux états (marche/arrêt), il n'y a statistiquement pratiquement aucune chance que, dans le fonctionnement habituel du bâtiment ou de la maison, la totalité des équipements soit dans l'un ou l'autre de ces états à un moment donné.

En prenant l'exemple de la commande de télérupteurs à l'aide de plusieurs dispositifs de commandes séparés, chaque ordre est nécessairement du type « prend l'état inverse du précédent ». Dans ce cas, il est virtuellement impossible à l'utilisateur de commander en une fois une action conduisant à la mise à l'arrêt ou à la mise en marche de tous les équipements du groupe par ce moyen. De même, dans l'hypothèse d'un forçage local d'un équipement d'un groupe, il est impossible, pour un second utilisateur, et donc pour un nouveau dispositif de commande générant une nouvelle instruction de commande, de connaître l'existence de ce forçage, ce qui peut aboutir localement à la non exécution de l'ordre de groupe tel que transmis.

Il est donc absolument nécessaire de procéder à une interrogation très rapide des équipements, afin d'envoyer ensuite un ordre correct, susceptible d'harmoniser le résultat final pour tous les équipements visés par la commande sans que cela prenne un temps tel que les utilisateurs en soient incommodés.

Pour remplir cet objectif, le procédé d'obtention rapide d'information de l'invention se caractérise à titre principal en ce qu'il est basé sur l'intégration desdites informations, utilisables par les couches supérieures applicatives du protocole de transmission de données utilisé dans le réseau, dans des signaux de la couche transport dudit protocole.

Les messages véhiculés dans cette couche étant proportionnellement très courts comparés à une commande classique véhiculée au niveau des couches logicielles applicatives, il est possible grâce à invention d'obtenir l'information d'état des équipements du groupe en quelques millisecondes, et de permettre d'envoyer une commande correcte au groupe avant même que l'utilisateur ne perçoive un délai de retard entre le moment où il a par exemple appuyé sur un interrupteur et l'allumage de lampes, dans l'exemple utilisé auparavant du télérupteur.

Selon une possibilité, lesdits signaux intégrant les informations à destination des couches applicatives peuvent être des messages générés pour confirmer la bonne transmission de messages envoyés sur le réseau, de type fast ACK.

Les messages de type fast ACK sont utilisés par le dispositif émetteur de la commande pour s'assurer de la bonne transmission de l'ordre vers les équipements. Un tel message est géré par la couche physique de transport du protocole. Sa fenêtre de temps de réponse peut avoir été attribuée lors de la phase de configuration, et elle offre donc une grande adaptabilité aux besoins spécifiques du réseau. En cas de non réception d'un message fast ACK, le dispositif émetteur renvoie la trame d'informations, c'est-à-dire l'ordre de commande.

De préférence, lesdites informations utilisables par les couches applicatives sont constituées d'au moins un bit intégré à un message fast ACK.

Plus précisément encore, lesdites informations sont disposées entre un segment d'identification et un segment de contrôle d'un signal fast ACK standard.

Les informations sont par exemple mises à disposition de la couche applicative sous forme d'une variable ou d'une adresse mémoire utilisées par la couche de transport et respectivement accessible ou lisible par ladite couche applicative.

Ainsi, de manière détaillée, un procédé d'obtention rapide de l'état de fonctionnement d'une pluralité d'équipements se caractériserait typiquement par les étapes suivantes :
- un dispositif de commande émet à t₀ un message sur le réseau à l'adresse d'équipements d'un groupe dont les états sont à tester ;
- chacun desdits équipements du groupe envoie en retour un message sous forme d'accusé de réception fast ACK incluant une information sur son état ;
- le dispositif de commande analyse ladite information sur l'état de chaque équipement ; et
- le dispositif de commande envoie au moins une commande à adresse des équipements du groupe pour leur faire prendre le même état.

Dans ce cas, l'analyse des informations faite par le dispositif de commande consiste en I'analyse de l'état de la variable ou de information contenue dans l'adresse mémoire mise à disposition par la couche transport du protocole.

L'invention va à présent être décrite plus en détail, en référence aux figures annexées, pour lesquelles :
- la figure 1 représente très schématiquement un bloc fonctionnel illustrant invention ; et
- la figure 2 est un diagramme temporel du fonctionnement de la collecte d'informations sur les états des équipements selon le procédé de l'invention.

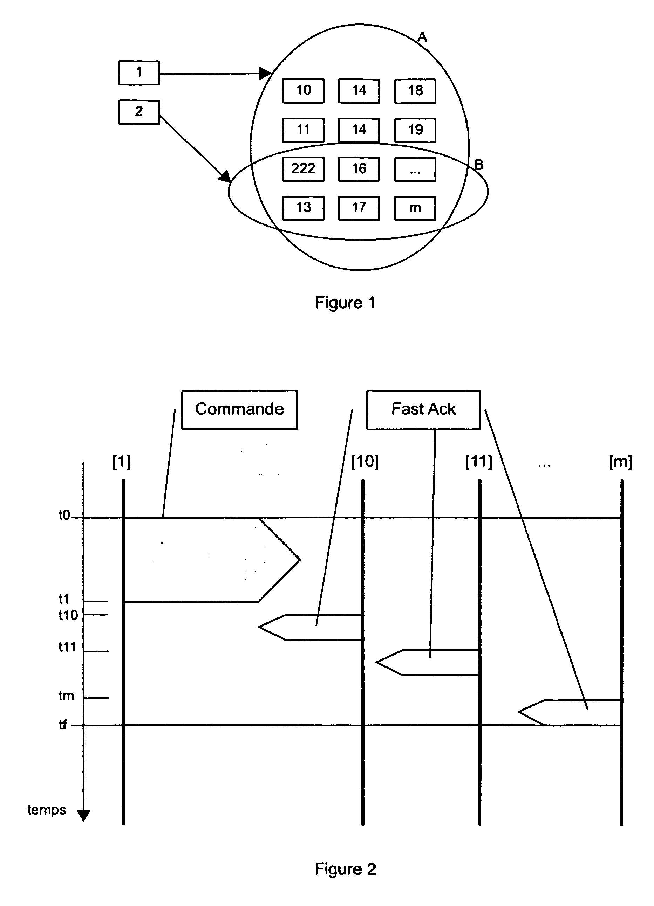

En référence à la figure 1, deux dispositifs émetteurs (1, 2), qui peuvent également faire office de dispositifs de commande, sont reliés à des groupes d'équipements respectivement A, B. Le groupe B est un sous-ensemble du groupe A, ce qui signifie que le dispositif de commande (2) émet des signaux de commande à destination d'une partie seulement des équipements vers lesquels les commandes issues du dispositif de commande (1) sont envoyées.

Ces commandes, qui relèvent des couches supérieures applicatives du protocole de transfert d'information, génèrent également des échanges d'information dans les couches inférieures physiques, par exemple de transport dudit protocole. Ainsi, comme on l'a déjà mentionné, les signaux d'accusé de réception circulant dans la couche transport dudit protocole peuvent être utilisés pour augmenter de manière sensible la rapidité des échanges.

La figure 2 montre ainsi une succession d'événements aboutissant à l'obtention, en un temps très bref, des informations d'états des équipements au niveau du dispositif (1) ou (2).

Une séquence de fonctionnement normal apparaît en figure 2 et se déroule de la manière suivante :
- à t₀, le dispositif de commande (1) envoie une commande ;
- à t₁₀, l'équipement (10) renvoie un accusé de réception fast ACK ;
- à t₁₁, l'équipement (11) renvoie un accusé de réception fast ACK ;
- ... ;
- jusqu'à tₘ, où l'équipement m renvoie également un message fast ACK du même type.

Le dispositif de commande (1) dispose donc des informations d'états de l'ensemble du groupe à un temps t_{f} très court par rapport au temps nécessaire à la collecte de l'ensemble de ces informations si les échanges étaient gérés à un niveau supérieur applicatif du protocole.

En l'espèce, les échanges se font donc par la couche physique inférieure de transport du protocole, par l'intermédiaire de quelques bits supplémentaires ajoutés aux messages existants fast ACK, bits dont le nombre dépend de la complexité de l'information à renvoyer à l'émetteur (1) ou (2).

Dans l'exemple cité auparavant d'un groupe de télérupteurs, pour lequel il s'agit de gérer une fonction de mise en marche ou de mise à l'arrêt, un seul bit est suffisant. Pour des messages plus compliqués, on pourra prévoir que les bits ajoutés au message fast ACK soient codés par exemple sur 1 octet.

La structure d'un message fast ACK reproduit généralement le modèle suivant : préambule + mode synchronisation + mode identification + nombre de contrôle. Dans le cas de l'invention, un tel message sera un peu différent, et se trouvera désormais sous la forme suivante : préambule + mode synchronisation + mode identification + octet d'information + nombre de contrôle. L'information de l'état de chaque équipement du groupe se trouve dans cet octet d'information ajouté. Cet octet n'existe en effet pas dans une trame fast ACK normale.

La mise à disposition de cette information à des couches logicielles supérieures applicatives s'effectue par un procédé qui s'apparente en fait au « tunneling », l'information en question étant comme indiqué auparavant disponible sous forme d'une variable accessible par les couches logicielles correspondantes, ou par lecture d'une case mémoire.

Dans l'exemple mentionné auparavant de la fonction télérupteur, une fois la collecte d'information effectuée, le ou les dispositifs émetteurs (1, 2) peuvent envoyer une commande adéquate, c'est-à-dire reliée à l'information reçue, à tous les télérupteurs du groupe. La durée de la totalité de la séquence reste inférieure à 200 millisecondes, quel que soit le nombre de dispositifs de commande, avec une utilisation minimale d'énergie. Cette durée est suffisamment faible pour que l'utilisateur ne la perçoive pas, et qu'il ait l'impression d'une simultanéité entre le lancement de la commande et son exécution.

## Revendications

1. Procédé d'obtention rapide d'informations sur l'état de fonctionnement d'une pluralité d'équipements (10, 11, ..., m) fonctionnant en groupe et commandés par au moins un dispositif de commande (1, 2) via un réseau de type domotique, **caractérisé en ce qu'**il est basé sur l'intégration desdites informations, utilisables par les couches supérieures applicatives du protocole de transmission de données utilisé dans le réseau, dans des signaux de la couche transport dudit protocole.

2. Procédé d'obtention rapide de l'état de fonctionnement d'une pluralité d'équipements selon la revendication précédente, **caractérisé en ce que** lesdits signaux sont des messages générés pour confirmer la bonne transmissions de messages envoyés sur le réseau, de type fast ACK.

3. Procédé d'obtention rapide de l'état de fonctionnement d'une pluralité d'équipements selon la revendication précédente, **caractérisé en ce que** lesdites informations sont constituées d'au moins un bit intégré à un message fast ACK.

4. Procédé d'obtention rapide de l'état de fonctionnement d'une pluralité d'équipements selon la revendication précédente, **caractérisé en ce que** lesdites informations sont disposées entre un segment d'identification et un segment de contrôle d'un signal fast ACK standard.

5. Procédé d'obtention rapide de l'état de fonctionnement d'une pluralité d'équipements selon l'une des revendications précédentes, **caractérisé en ce que** lesdites informations sont mises à disposition de la couche applicative sous forme d'une variable ou d'une adresse mémoire utilisées par la couche de transport et respectivement accessible ou lisible par ladite couche applicative.

6. Procédé d'obtention rapide de l'état de fonctionnement d'une pluralité d'équipements selon l'une des revendications précédentes, **caractérisé par** les étapes suivantes :
- un dispositif de commande (1, 2) émet à t₀ un message sur le réseau à l'adresse d'équipements (10, 11, ..., m) d'un groupe dont les états sont à tester ;
- chacun desdits équipements (10, 11, ..., m) du groupe envoie en retour un message sous forme d'accusé de réception fast ACK incluant une information sur son état ;
- le dispositif de commande (1, 2) analyse les informations sur l'état de chaque équipement (10, 11, ..., m) ; et
- le dispositif de commande (1, 2) envoie au moins une commande à l'adresse des équipements (10, 11, ..., m) du groupe pour leur faire prendre le même état.

7. Procédé d'obtention rapide de l'état de fonctionnement d'une pluralité d'équipements selon la revendication précédente, **caractérisé en ce que** l'analyse des informations faites par le dispositif de commande (1, 2) consiste en l'analyse de l'état de la variable ou de l'information contenue dans l'adresse mémoire mise à disposition par la couche transport du protocole.

## Claims

1. Method for rapidly obtaining information on the operational status of a plurality of equipment (10, 11, ..., m) operating as a group and controlled by at least one control device (1, 2) via a network of the type used in automating homes and buildings, **characterized in that** it is based on the integration of the said information, usable by the upper application layers of the data transmission protocol used in the network, in the signals of the transport layer of the said protocol.

2. Method for rapidly obtaining information on the operational status of a plurality of equipment according to the preceding claim, **characterized in that** the said signals are messages generated to confirm the correct transmission of messages sent on the network, of the fast ACK type.

3. Method for rapidly obtaining information on the operational status of a plurality of equipment according to the preceding claim, **characterized in that** the said information is made up of at least one bit integrated into a fast ACK message.

4. Method for rapidly obtaining information on the operational status of a plurality of equipment according to the preceding claim, **characterized in that** the said information is placed between an identification segment and a control segment of a standard fast ACK signal.

5. Method for rapidly obtaining information on the operational status of a plurality of equipment according to one of the preceding claims, **characterized in that** the said information is made available to the application layer in the form of a variable or a memory address used by the transport layer and respectively accessible or readable by the said application layer.

6. Method for rapidly obtaining information on the operational status of a plurality of equipment according to one of the preceding claims, **characterized by** the following steps:
- a control device (1, 2) emits at to a message on the network to the equipment (10, 11, ..., m) in a group whose states are to be tested;
- each of the said equipment (10, 11, ..., m) in the group sends in return a message fast ACK acknowledging receipt and including information on its status;
- the control device (1, 2) analyses the information on the status of each piece of equipment (10, 11, ..., m); and
- the control device (1, 2) sends at least one command to the equipment (10, 11, ..., m) in the group in order to give them an identical status.

7. Method for rapidly obtaining information on the operational status of a plurality of equipment according to the preceding claim, **characterized in that** the analysis of the information done by the control device (1, 2) consists of analysing the status of the variable or the information contained in the memory address made available by the transport layer of the protocol.

## Patentansprüche

1. Verfahren zum schnellen Erhalt von Informationen über den Betriebszustand einer Mehrzahl von Einrichtungen (10, 11, ..., m), die in einer Gruppe arbeiten und von mindestens einer Steuervorrichtung (1, 2) über ein Netzwerk vom domotischen Typ gesteuert werden, **dadurch gekennzeichnet, dass** es auf der Integration der Informationen, die von den oberen Applikationsschichten des Datenübertragungsprotokolls, das innerhalb des Netzwerks verwendet wird, in Signale der Transportschicht des Protokolls basiert.

2. Verfahren zum schnellen Erhalt des Betriebszustands einer Mehrzahl von Einrichtungen nach vorangehendem Anspruch, **dadurch gekennzeichnet, dass** die Signale generierte Nachrichten vom Typ fast ACK sind, um die gute Übertragung von Nachrichten, die über das Netzwerk geschickt werden, zu bestätigen.

3. Verfahren zum schnellen Erhalt des Betriebszustands einer Mehrzahl von Einrichtungen nach vorangehendem Anspruch, **dadurch gekennzeichnet, dass** die Informationen aus mindestens einem Bit bestehen, das in eine fast ACK Nachricht integriert ist.

4. Verfahren zum schnellen Erhalt des Betriebszustands einer Mehrzahl von Einrichtungen nach vorangehendem Anspruch, **dadurch gekennzeichnet, dass** die Informationen zwischen einem Identifikationssegment und einem Kontrollsegment eines fast ACK Standardsignals angeordnet sind.

5. Verfahren zum schnellen Erhalt des Betriebszustands einer Mehrzahl von Einrichtungen nach einem der vorangehenden Ansprüche, **dadurch gekennzeichnet, dass** die Informationen der Applikationsschicht in Form einer Variablen oder einer Speicheradresse zur Verfügung gestellt werden, die von der Transportschicht verwendet werden und von der Applikationsschicht jeweils zugänglich oder lesbar sind.

6. Verfahren zum schnellen Erhalt des Betriebszustands einer Mehrzahl von Einrichtungen nach einem der vorangehenden Ansprüche, das durch die folgenden Schritte gekennzeichnet ist:
- eine Steuervorrichtung (1, 2) sendet bei to eine Nachricht über das Netzwerk an die Adresse von Einrichtungen (10, 11, ..., m) einer Gruppe, deren Zustände zu testen sind,
- jede der Einrichtungen (10, 11, ..., m) der Gruppe schickt eine Nachricht in Form einer fast ACK Empfangsbestätigung zurück, die eine Information über ihren Zustand einschließt,
- die Steuervorrichtung (1, 2) analysiert die Informationen über den Zustand jeder Einrichtung (10, 11, ..., m) und
- die Steuervorrichtung (1, 2) sendet mindestens einen Befehl an die Adresse der Einrichtungen (10, 11, ..., m) der Gruppe, damit sie denselben Zustand einnehmen.

7. Verfahren zum schnellen Erhalt des Betriebszustands einer Mehrzahl von Einrichtungen nach vorangehendem Anspruch, **dadurch gekennzeichnet, dass** die Analyse der Informationen, die von der Steuervorrichtung (1, 2) durchgeführt wird, in der Analyse des Zustands der Variablen oder der Information besteht, die in der Speicheradresse enthalten ist, die von der Transportschicht des Protokolls zur Verfügung gestellt wird.
